# EUROPEAN PATENT SPECIFICATION

(11) **EP 3 938 112 B1**
(45) Date of publication and mention of the grant of the patent: **29.10.2025**
(21) Application number: 20708676.0
(22) Date of filing: 02.03.2020
(51) Int. Cl.: B01L 9/00, G02B 21/34, H01J 37/20

(54) **SLIDE-HOLDER SUPPORT FOR A MICROSCOPE**
OBJEKTIVTRÄGERHALTERUNG FÜR EIN MIKROSKOP
SUPPORT DE PORTE-LAME DESTINÉ À UN MICROSCOPE

(30) Priority: 13.03.2019 IT 201900003681
(43) Date of publication of application: 19.01.2022
(73) Proprietor: NTP Nano Tech Projects S.r.l., 38068 Rovereto (TN) (IT)
(72) Inventor: MALAN, Mauro Andrea, 61048 Sant'Angelo in Vado, Pesaro E Urbino (IT); GALAVOTTI, Massimo, 61048 Sant'Angelo in Vado, Pesaro E Urbino (IT); CARLONI, Adolfo, 61048 Sant'Angelo in Vado, Pesaro E Urbino (IT); MARONCELLI, Gianluca, 61048 Sant'Angelo in Vado, Pesaro E Urbino (IT)
(74) Representative: Leihkauf, Steffen Falk
(86) International application number: PCT/IB2020/051754
(87) International publication number: WO 2020/183284

(56) References cited:
- US-A1- 2004 086 868
- US-A1- 2013 201 553
- US-A1- 2017 122 971

## Description

### Field of the invention

The present invention relates to a slide-holder support for a microscope. In particular, such a slide holder can be of the type which can be mounted on a movable table of a microscope capable of moving such a movable table according to predetermined directions which allow the correct positioning of each slide with respect to a microscope lens each time.

### Background art

The technique of placing one or more microscope slides on a specific slide-holder support, which can be removably inserted on a movable table of a microscope, is known.

In other words, such a slide-holder support acts as a mechanical interface between the slide and the movable table.

A quantity of a material to be analyzed by the microscope itself is placed on each slide.

Generally, the slide-holder support is inserted by sliding into a corresponding seat in the movable table.

Slide-holder supports having a plurality of seats for accommodating a corresponding plurality of slides at the same time are known.

The slide-holder support comprises a through opening under the slide or o the plurality of slides in order to allow the illumination of the slide from the opposite side with respect to the microscope lens.

The movable table of the microscope is moved so that each slide is selectively arranged in correspondence with the microscope lens.

This slide-holder support is not free from disadvantages.

Indeed, the material which is placed on the upper surface of the slide can move on the slide itself and even falls off the slide and underneath it.

In this case, such a material is likely to fall through the through opening of the slide-holder support, under the slide-holder support itself, with the risk of reaching the parts of the microscope arranged under the opening and aligned with it, e.g. a lighting device or the microscope lens itself.

This may have negative consequences on the delicate, high-tech parts of the microscope and on the correct functionality of the microscope, e.g. on the optimal visualization of the sample on the slide.

Therefore, the need is felt to provide a slide-holder support which can protect the microscope, or the parts thereof arranged under the slide-holder support, from the risk of fouling or damage caused by material to be analyzed falling from the slides themselves.

US 2004/086868 A1, US 2017/122971 A1 and US 2013/201553 A1 describe slide-holders of the prior art.

### Summary of the invention

It is the object of the present invention to devise and provide a microscope slide-holder support which allows to satisfy the aforesaid needs and to at least partially overcome the drawbacks described above with reference to the prior art.

In particular, it is a task of the present invention to provide a microscope slide-holder support which allows to protect the parts of the microscope arranged under the slide-holder support in use.

It is another object of the present invention to provide a microscope slide-holder support which, in addition to allowing the protection of the parts of the microscope arranged under the slide-holder support in use, also allows quick and easy maintenance and cleaning.

These and further objects and advantages are achieved by a microscope slide-holder support and an assembly of a microscope slide-holder support and at least one slide, in accordance with the independent claims.

Further objects, solutions, and advantages are present in the embodiments described below and claimed in the dependent claims.

### Brief description of the drawings

The invention will be illustrated below by describing some embodiments by way of non-limiting example, with reference to the accompanying drawings, in which:

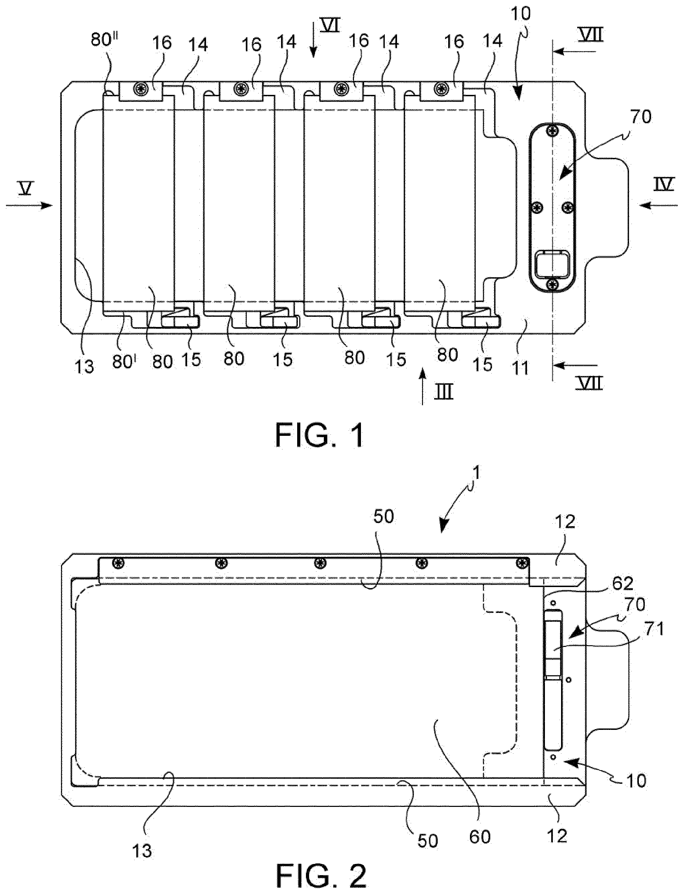

- figure 1 illustrates an orthogonal top view of a slide-holder support according to the invention;
- figure 2 shows an orthogonal bottom view of the slide-holder support in figure 1;

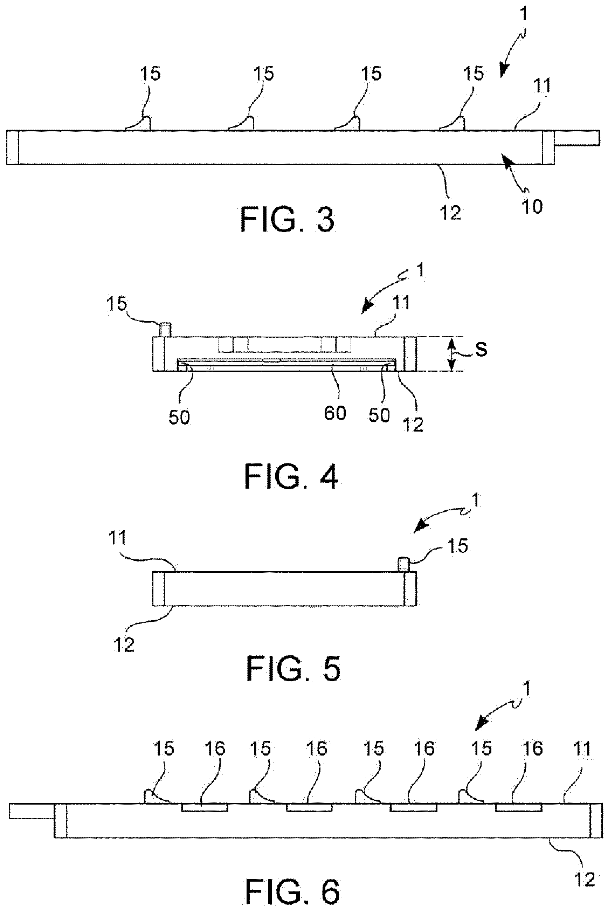

- figure 3 shows an orthogonal front view of the slide-holder support in figure 1;
- figure 4 shows an orthogonal view from the right of the slide-holder support in figure 1;
- figure 5 shows an orthogonal view from the left of the slide-holder support in figure 1;
- figure 6 shows an orthogonal rear view of the slide-holder support in figure 1;

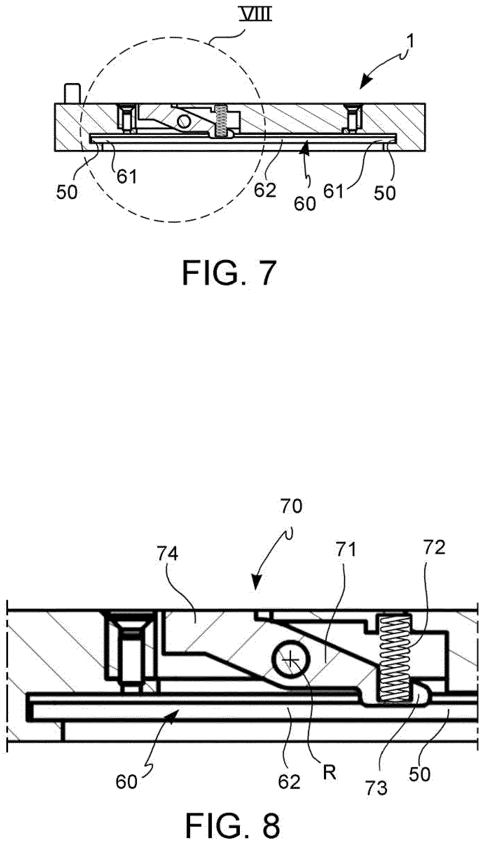

- figure 7 shows a section view of the slide-holder support in figure 1, taken along a section plan VII;
- figure 8 shows an enlarged detail VIII in figure 7;

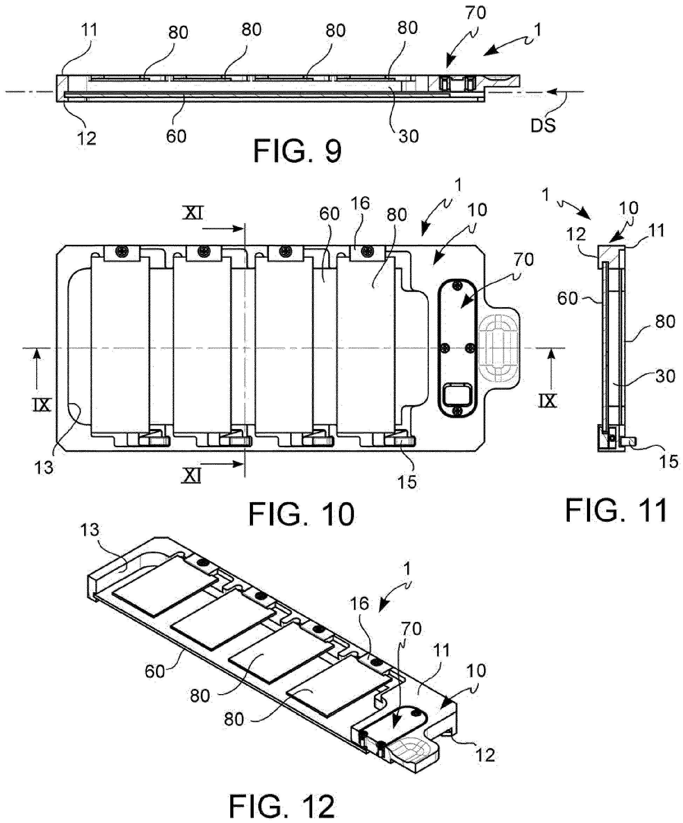

- figure 9 shows a section view of the slide-holder support in figure 10, taken along a section plane IX;
- figure 10 is an orthogonal top view of the slide-holder support in figure 1;
- figure 11 shows a section view of the slide-holder support in figure 10, taken along a section plane XI;
- figure 12 shows an isometric partial section view of the slide-holder support in figure 10, in which one half of the support was removed for the sake of ease of illustration.

### Description of the preferred embodiments

A microscope slide-holder support according to the invention is shown in the figures and indicated by reference numeral 1 as a whole.

The slide-holder support is adapted to be removably mounted on the movable table of a microscope.

The support is adapted to support one or more microscope slides on which a material to be analyzed can be deposited.

The microscope may comprise moving means of the movable table so as to position the slide in the correct position with respect to the microscope lens.

The slide-holder support comprises a plate-shaped body 10 defining an upper body surface 11, an opposite lower body surface 12, a body thickness S defined between said upper body surface 11 and said lower body surface 12.

The body 10 has a through-opening 13, preferably central, through the body 10 between said upper body surface 11 and said lower body surface 12.

The function of such an opening is to allow light to pass through it to allow the visualization and/or the illumination of a material to be analyzed deposited on the slide 80.

The body 10 has at least one slide seat 14 adapted to removably accommodate a corresponding microscope slide 80 straddling said through-opening 13.

The at least one slide seat 14 is arranged at said upper body surface 11 and must be superimposed, at least partially, on said through opening 13.

The slide-holder support 1 comprises upper removable engagement means 15, 16 for engaging/disengaging said at least one microscope slide 80 to/from said body 10 at a respective said at least one slide seat 14.

The slide-holder support 1 further comprises a collection plate 60 configured to be coupled to said body 10 to close completely said through opening 13 close to said lower body surface 12, said collection plate 60 and said through opening 13 being configured to jointly form a collection compartment 30 into said slide-holder support 1.

A purpose of the collection plate is to form a collection chamber inside the body 10, arranged in use below the at least one microscope slide 80.

According to an embodiment, the plate-shaped body 10 comprises a collection plate seat 50 arranged near said lower body surface 12, to accommodate said collection plate 60, preferably in a removable manner.

According to an embodiment, the slide-holder support 1 comprises lower removable engagement means 70 for engaging/disengaging said collection plate 60 to/from said body 10 into said collection plate seat 50.

Such lower removable engagement means allow replacement of the collection plate, e.g. when it is fouled, or when necessary for other reasons.

The collection plate 60 is dimensioned to completely close said through opening 13 near said lower body surface 12.

Preferably, the collection plate 60 is configured to form a seal for liquids with said through opening 13 or with said collection plate seat 50.

Thereby, the collection compartment 30 is liquidtight.

According to an embodiment, the collection plate seat 50 is formed into the body 10.

Thereby, the collection plate prevents any material arranged on the at least one slide 80 from falling under the body 10 through the through opening.

This allows to protect any apparatus operationally arranged under the slide-holder support from being accidentally reached by such materials to be analyzed.

According to an embodiment, the collection plate seat 50 enters into the thickness S of the body starting from said lower body surface 12 according to such a depth to avoid said collection plate 60, in use, from protruding externally with respect to said lower body surface 12.

According to this embodiment, the lower surface of the collection plate 60 is prevented from protruding outwards from the lower body surface 12.

Thereby, the lower body surface 12 protects the bottom surface of the collection plate from the accidental contact with other surfaces.

Thereby, the collection plate is prevented from touching any support surface of the movable table of the microscope table on which the slide-holder support is mounted.

According to another embodiment, the collection plate seat 50 can be arranged, even partially, outside, or protruding, with respect to said lower body surface 12.

In such a case, the collection plate 60 may protrude externally with respect to the lower body surface 12.

Thereby, the volume contained by the collection chamber 30 is increased because its height measured orthogonally to the collection plate is increased.

For example, the collection plate seat 50 can be made in an external element with respect to body 10, e.g. separated from the body 10 and fixed, or fixable, to body 10.

The collection plate 60 is made of transparent material, preferably made of glass.

Alternatively, the collection plate 60 may be made of another transparent material, e.g. polymeric material, or Plexiglas.

The transparency of the collection plate allows to illuminate at least one slide by means of a light source arranged on the opposite side of the slide-holder support.

According to an embodiment, the lower body surface 12 is either flat or substantially flat.

According to an embodiment, the collection plate seat 50 is configured to slidingly house the collection plate 60 according to a preset sliding direction DS up to a plate operational position.

According to an embodiment, the predetermined sliding direction DS is parallel to the lower body surface 12.

According to an embodiment, the lower body surface 12 is either flat or substantially flat, and wherein the collection plate 60 is either flat or substantially flat, and wherein the collection plate seat 50 is configured to slide the collection plate 60 parallel to the lower body surface 12.

In other words, the collection plate seat 50 is configured to translate the collection plate 60 parallel to itself and parallel to said lower body surface 12.

The collection plate 60 defines two opposite longitudinal plate edges 61.

According to an embodiment, the collection plate seat 50 comprises two opposite sliding channels 51 facing each other and configured to slidingly accommodate said two opposite longitudinal plate edges 61.

According to an embodiment, the two opposite sliding channels 51 and the two opposite longitudinal plate edges 61 are straight and mutually parallel.

According to an embodiment, the lower removable engagement means 70 comprise a movable engagement element 71 which is movable between an engaged position, in which said engagement element 71 protrudes with respect to said lower engagement seat 50 so as to retain said collection plate 60 abutted in an operational position, and a disengaged position, in which said engagement element 71 is retracted with respect to said lower engagement seat 50 so as to allow the extraction of the collection plate 60 with respect to the body 10 by sliding the collection plate along the predetermined sliding direction DS.

According to an embodiment, the collection plate 60 defines a transverse plate edge 62, which is transverse to the predetermined sliding direction DS.

In such a case, the movable engagement element 71, in its engaging position, can be configured to hold the transverse plate edge 62.

According to an embodiment, the lower engagement means 70 comprise an elastic element 72 arranged to bias said engagement element 71 towards said engaged position.

According to an embodiment, the engagement element 71 is, or comprises, a first-class lever pivotally engaged to the body 10 about a rotation axis R, or fulcrum, and having a first free engagement end 73 configured to engage said collection plate in abutment in the engaged position, and an opposite free actuation end 74 adapted to be pressed by a user to bring the engagement element 71 into the disengaged position.

The rotation axis R, or fulcrum, is preferably interposed between the first free engagement end 73 and the free actuating end 74.

In other words, the engagement element 71 is preferably a first-class lever.

According to an embodiment, the rotation axis R is arranged either along said sliding direction DS or parallel to said sliding direction DS.

According to an embodiment, the lower removable engagement means 70 are completely contained within the thickness S of the body 10.

Thereby, the lower removable engagement means 70, by not protruding from the body, avoid being an obstacle to the movement of the slide-holder support during its application to the microscope.

According to an embodiment, the at least one microscope slide 80 configured to be removably housed in a corresponding one of said at least one seat 14, straddling said central through opening 13 so that at least one portion of said at least one slide 80 remains overlapping said through opening 13.

According to an embodiment, the at least one slide 80, when engaged in its respective slide seat 14, is substantially parallel to said upper body surface 11, preferably either coplanar or substantially coplanar to said upper body surface 10.

According to an embodiment, the at least one slide 80 is, or comprises, a transparent rectangular flat plate, preferably made of glass.

According to an embodiment, the at least one slide 80 can be engaged in a corresponding one of said at least one slide seat 14, at its short sides 80', 80".

According to an embodiment, the at least one slide seat 14 enters into the thickness S of the body starting from said lower body surface 11 according to such a depth so as to avoid said at least one microscope slide 80 from protruding externally with respect to said lower body surface 11.

According to an embodiment, the upper body surface 11 is substantially flat, preferably parallel to said lower body surface 12.

According to an embodiment, the upper engagement means 15, 16 comprise an undercut portion 16 at a first end of said slide seat 14 and a movable engagement element 15 at an opposite second end of said slide seat 14.

According to an embodiment, the undercut portion 16 and the movable engagement element 15 are configured to engage opposite short 80' and 80'' sides of said at least one slide 80'.

According to an embodiment, the movable engagement 15 is a sliding element.

According to an embodiment, the at least one slide seat 14 is formed by a plurality of slide seats 14, said slide seats 14 being distributed along a preset distribution direction, wherein said preset distribution direction is parallel to said sliding direction DS.

According to an embodiment, the slide seats 14 of said plurality are spaced apart along the predetermined distribution direction DS, so as to accommodate a corresponding plurality of microscope slides 80 in a mutually spaced manner.

According to an embodiment, the at least one slide seat 14 is formed by four slide seats 14.

According to an aspect of the present invention, the aforesaid purposes and advantages are achieved by means of an assembly of a microscope slide-holder support 1 as described above, and at least one microscope slide 80.

The at least one microscope slide 80 is configured to be removably housed in a corresponding one of said at least one seat 14, straddling said central through opening 13 so that at least one portion of said at least one slide 80 remains overlapping said through opening 13.

Those skilled in the art may make changes and adaptations to the embodiments of the device described above or can replace elements with others which are functionally equivalent in order to meet contingent needs without departing from the scope of the following claims. All the features described above as belonging to a possible embodiment may be implemented irrespective of the other described embodiments.

It is worth noting that the figures are not necessarily in scale.

All the features described here may be combined in any combination, except for the combinations in which at least some of such features mutually exclude one another.

## Claims

1. A microscope slide-holder support (1), comprising:
- a plate-shaped body (10) defining an upper body surface (11), an opposite lower body surface (12), a body thickness (S) defined between said upper body surface (11) and said lower body surface (12); said body having a through opening (13) passing through the body (10) between said upper body surface (11) and said lower body surface (12), said body (10) having at least one slide seat (14) adapted to removably house a corresponding microscope slide (80) at said upper body surface (11) straddling said central through opening (13);
said at least one slide seat (14) being arranged at said upper body surface (11) and superimposed, at least partially, on said through opening (13);
- upper removable engagement means (15, 16) for engaging/disengaging said at least one microscope slide (80) to/from said body (10) into said at least one slide seat (14);
- a collection plate (60) made of transparent material configured to be coupled to said body (10);
**characterised in that** said collection plate (60) is sized in order to completely close said through opening (13) close to said lower body surface (12), and wherein said collection plate (60) and said through opening (13) are configured to jointly form a collection compartment (30) into said slide-holder support (1).

2. A slide-holder support (1) according to claim 1, wherein said body (10) comprises a collection plate seat (50) arranged close to said lower body surface (12) to removably house said collection plate (60); and wherein said slide-holder support (1) comprises lower removable engagement means (70) for engaging/disengaging said collection plate (60) to/from said body (10) into said collection plate seat (50).

3. A slide-holder support (1) according to claim 2, wherein the collection plate seat (50) is formed into the body (10).

4. A slide-holder support (1) according to claim 3, wherein the collection plate seat (50) enters into the thickness (S) of the body starting from said lower body surface (12) according to such a depth to avoid said collection plate (60), in use, from protruding externally with respect to said lower body surface (12).

5. A slide-holder support (1) according to at least one preceding claim, wherein said collection plate (60) is made of glass.

6. A slide-holder support (1) according to at least one of claims 2 to 5, wherein the collection plate seat (50) is configured to slidingly house the collection plate (60) according to a preset sliding direction (DS) up to a plate operating position.

7. A slide-holder support (1) according to claim 6, wherein the preset sliding direction (DS) is parallel to the lower body surface (12).

8. A slide-holder support (1) according to claim 6, wherein said at least one slide seat (14) is formed by a plurality of slide seats (14), said slide seats (14) being distributed along a preset distribution direction, wherein said preset distribution direction is parallel to said sliding direction (DS).

9. A slide-holder support (1) according to claim 6, wherein the lower removable engagement means (70) comprise a movable engagement element (71) which is movable between an engaged position, in which said engagement element (71) protrudes with respect to said lower engagement seat (50) so as to retain abutted said collection plate (60) in operating position, and a disengaged position, wherein said engagement element (71) is retracted with respect to said lower engagement seat (50) so as to allow the extraction of the collection plate (60) with respect to the body (10).

10. A slide-holder support (1) according to claim 9, wherein the engagement element (71) is a lever pivotally engaged to the body (10) about a rotation axis (R) and having a first free engagement end (73) configured to engage in abutment said collection plate in the engaged position, and an opposite free actuation end (74) adapted to be pressed by a user to bring the engagement element (71) into the disengaged position.

11. A slide-holder support (1) according to claim 10, wherein the rotation axis (R) is arranged parallel to said sliding direction (DS).

12. A slide-holder support (1) according to claim 9, wherein the lower engagement means (70) comprise an elastic element (72) arranged to affect said engagement element (71) towards said engaged position.

13. A slide-holder support (1) according to at least one of claims 2 to 12, wherein the lower removable engagement means (70) are completely contained within the thickness (S) of the body (10).

14. An assembly of a microscope slide-holder support (1) and of at least one microscope slide (80), comprising:
- a slide-holder support (1) according to at least one of the preceding claims;
- at least one microscope slide (80) configured to be removably housed in a corresponding one of said at least one seat (14), straddling said central through opening (13) so that at least one portion of said at least one slide (80) remains overlapping said through opening (13).

## Patentansprüche

1. Mikroskop-Objektivträgerhalterung (1), umfassend:
- einen plattenförmigen Körper (10), der eine obere Körperoberfläche (11), eine gegenüberliegende untere Körperoberfläche (12) definiert und eine Körperdicke (S), die zwischen der oberen Körperoberfläche (11) und der unteren Körperoberfläche (12) definiert wird; wobei der Körper eine Durchgangsöffnung (13) aufweist, die durch den Körper (10) zwischen der oberen Körperoberfläche (11) und der unteren Körperoberfläche (12) durchgeht, wobei der Körper (10) mindestens einen Objektivsitz (14) aufweist, der eingerichtet ist, einen entsprechenden Mikroskop-Objektiv (80) lösbar an der oberen Körperoberfläche (11) aufzunehmen, indem es die zentrale Durchgangsöffnung (13) überbrückt;
- wobei der mindestens eine Objektivsitz (14) an der oberen Körperoberfläche (11) angeordnet ist und mindestens teilweise auf der Durchgangsöffnung (13) überlagert ist;
- obere lösbare Eingriffsmittel (15, 16) zum Eingreifen/Lösen des mindestens einen Mikroskop-Objektiv (80) an/von dem Körper (10) in mindestens einen Objektivsitz (14);
- eine Sammelplatte (60) aus transparentem Material, die dazu konfiguriert ist, mit dem Körper (10) gekoppelt zu werden; **dadurch gekennzeichnet, dass** die Sammelplatte (60) bemessen ist, sodass sie die Durchgangsöffnung (13) vollständig in der Nähe der unteren Körperoberfläche (12) verschließt, und wobei die Sammelplatte (60) und die Durchgangsöffnung (13) dazu konfiguriert sind, gemeinsam ein Sammelfach (30) in dem Objektivträgerhalterung (1) zu bilden.

2. Objektivträgerhalterung (1) nach Anspruch 1, wobei der Körper (10) einen Sammelplattensitz (50) umfasst, der in der Nähe der unteren Körperoberfläche (12) angeordnet ist, um die Sammelplatte (60) lösbar aufzunehmen; und wobei der Objektivträgerhalterung (1) untere lösbare Eingriffsmittel (70) umfasst, um die Sammelplatte (60) an/von dem Körper (10) in dem Sammelplattensitz (50) einzugreifen/zu lösen.

3. Objektivträgerhalterung (1) nach Anspruch 2, wobei der Sammelplattensitz (50) in dem Körper (10) ausgebildet ist.

4. Objektivträgerhalterung (1) nach Anspruch 3, wobei der Sammelplattensitz (50) in die Dicke (S) des Körpers ausgehend von dem unteren Körperfläche (12) entsprechend einer solchen Tiefe eindringt, sodass die Sammelplatte (60) im Gebrauch nach außen in Bezug auf die untere Körperfläche nicht vorstehen kann.

5. Objektivträgerhalterung (1) nach mindestens einem der vorhergehenden Ansprüche, wobei die Sammelplatte (60) aus Glas besteht.

6. Objektivträgerhalterung (1) nach mindestens einem der Ansprüche 2 bis 5, wobei der Sammelplattensitz (50) dazu konfiguriert ist, die Sammelplatte (60) nach einer voreingestellten Gleitrichtung (DS) bis zu einer Plattenbetriebsposition gleitend aufzunehmen.

7. Objektivträgerhalterung (1) nach Anspruch 6, wobei die voreingestellte Gleitrichtung (DS) parallel zu der unteren Körperoberfläche (12) ist.

8. Objektivträgerhalterung (1) nach Anspruch 6, wobei der mindestens eine Objektivsitz (14) durch eine Vielzahl von Objektivsitzen (14) gebildet ist, wobei die Objektivsitze (14) entlang einer voreingestellten Verteilungsrichtung verteilt sind, wobei die voreingestellte Verteilungsrichtung parallel zu der Gleitrichtung (DS) ist.

9. Objektivträgerhalterung (1) nach Anspruch 6, wobei die unteren lösbaren Eingriffsmittel (70) ein bewegliches Eingriffselement (71) umfassen, das zwischen einer Eingriffsposition, in der das Eingriffselement (71) in Bezug auf den unteren Eingriffssitz (50) vorsteht, um die Sammelplatte (60) in Betriebsposition anliegend zu halten, und einer gelösten Position beweglich ist, in der das Eingriffselement (71) in Bezug auf den unteren Eingriffssitz (50) eingefahren wird, um das Herausziehen der Sammelplatte (60) in Bezug auf den Körper (10) zu ermöglichen.

10. Objektivträgerhalterung (1) nach Anspruch 9, wobei das Eingriffselement (71) ein Hebel ist, der schwenkbar mit dem Körper (10) um eine Rotationsachse (R) in Eingriff steht und ein erstes freies Eingriffsende (73) aufweist, das dazu konfiguriert ist, in der Eingriffsposition an der Sammelplatte anzuliegen, und ein gegenüberliegendes freies Betätigungsende (74), das eingerichtet ist, von einem Benutzer gedrückt zu werden, um das Eingriffselement (71) in die gelöste Position zu bringen.

11. Objektivträgerhalterung (1) nach Anspruch 10, wobei die Rotationsachse (R) parallel zu der Gleitrichtung (DS) angeordnet ist.

12. Objektivträgerhalterung (1) nach Anspruch 9, wobei die unteren Eingriffsmittel (70) ein elastisches Element (72) umfassen, das eingerichtet ist, das Eingriffselement (71) zu der Eingriffsposition zu bewegen.

13. Objektivträgerhalterung (1) nach mindestens einem der Ansprüche 2 bis 12, wobei die unteren lösbaren Eingriffsmittel (70) vollständig innerhalb der Dicke (S) des Körpers (10) enthalten sind.

14. Baugruppe bestehend aus einer Objektivträgerhalterung (1) und mindestens einem Mikroskop-Objektiv (80), umfassend:
- eine Objektivträgerhalterung (1) nach mindestens einem der vorhergehenden Ansprüche;
mindestens ein Mikroskop-Objektiv (80), das konfiguriert ist, lösbar in einem entsprechenden von mindestens einen Sitz (14) aufgenommen zu werden, indem es die zentrale Durchgangsöffnung (13) überbrückt, sodass mindestens ein Abschnitt des mindestens einen Objektivs (80) auf die Durchgangsöffnung (13) überlappt bleibt.

## Revendications

1. Support de porte-lame de microscope (1), comprenant :
un corps en forme de plaque (10) définissant une surface supérieure du corps (11), une surface inférieure opposée du corps (12), une épaisseur du corps (S) définie entre ladite surface supérieure du corps (11) et ladite surface inférieure du corps (12) ; ledit corps présentant une ouverture traversante (13) traversant le corps (10) entre ladite surface supérieure du corps (11) et ladite surface inférieure du corps (12), ledit corps (10) présentant au moins un logement de lame (14) adapté à loger de manière amovible une lame de microscope correspondante (80) au niveau de ladite surface supérieure du corps (11) chevauchant ladite ouverture traversante centrale (13) ;
ledit au moins un logement de lame (14) étant disposé sur ladite surface supérieure du corps (11) et superposé, partiellement, à ladite ouverture traversante (13) ;
au moins des moyens d'engagement amovibles supérieurs (15, 16) pour engager/dégager ladite au moins une lame de microscope (80) à/du corps (10) dans ledit au moins un logement de lame (14) ;
une plaque de collecte (60) réalisée en matériau transparent configurée pour être couplée audit corps (10) **caractérisé en ce que** ladite plaque de collecte (60) est dimensionnée de manière à fermer complètement ladite ouverture traversante (13) à proximité de ladite surface inférieure du corps (12), et **en ce que** ladite plaque de collecte (60) et ladite ouverture traversante (13) sont configurées pour former conjointement un compartiment de collecte (30) dans ledit support de porte-lame (1).

2. Support de porte-lame (1) selon la revendication 1, dans lequel ledit corps (10) comprend un logement de plaque de collecte (50) disposé à proximité de ladite surface inférieure du corps (12) pour loger de manière amovible ladite plaque de collecte (60) ; et dans lequel ledit support de porte-lame (1) comprend des moyens d'engagement amovibles inférieurs (70) pour engager/dégager ladite plaque de collecte (60) à/du corps (10) dans ledit logement de plaque de collecte (50).

3. Support de porte-lame (1) selon la revendication 2, dans lequel le logement de plaque de collecte (50) est formé dans le corps (10).

4. Support de porte-lame (1) selon la revendication 3, dans lequel le logement de plaque de collecte (50) s'étend dans l'épaisseur (S) du corps à partir de ladite surface inférieure du corps (12) selon une profondeur telle qu'elle évite que ladite plaque de collecte (60), en usage, ne dépasse extérieurement par rapport à ladite surface inférieure du corps (12).

5. Support de porte-lame (1) selon au moins une revendication précédente, dans lequel ladite plaque de collecte (60) est réalisée en verre.

6. Support de porte-lame (1) selon au moins une des revendications 2 à 5, dans lequel le logement de plaque de collecte (50) est configuré pour loger de manière coulissante la plaque de collecte (60) selon une direction de coulissement prédéterminée (DS) jusqu'à une position de fonctionnement de la plaque.

7. Support de porte-lame (1) selon la revendication 6, dans lequel la direction de coulissement prédéterminée (DS) est parallèle à la surface inférieure du corps (12).

8. Support de porte-lame (1) selon la revendication 6, dans lequel ledit au moins un logement de lame (14) est formé par une pluralité de logements de lames (14), lesdits logements de lames (14) étant distribués le long d'une direction de distribution prédéterminée, dans lequel ladite direction de distribution prédéterminée est parallèle à ladite direction de coulissement (DS).

9. Support de porte-lame (1) selon la revendication 6, dans lequel les moyens d'engagement amovibles inférieurs (70) comprennent un élément d'engagement mobile (71) qui est mobile entre une position engagée, dans laquelle ledit élément d'engagement (71) fait saillie par rapport audit logement inférieur d'engagement (50) de manière à retenir aboutée la plaque de collecte (60) en position de fonctionnement, et une position désengagée, dans laquelle ledit élément d'engagement (71) est rétracté par rapport audit logement inférieur d'engagement (50) de manière à permettre l'extraction de la plaque de collecte (60) par rapport au corps (10).

10. Support de porte-lame (1) selon la revendication 9, dans lequel l'élément d'engagement (71) est un levier engagé de manière pivotante au corps (10) autour d'un axe de rotation (R) et présentant une première extrémité libre d'engagement (73) configurée pour venir en butée contre ladite plaque de collecte en position engagée, et une extrémité libre d'actionnement opposée (74) adaptée à être pressée par un utilisateur pour amener l'élément d'engagement (71) en position désengagée.

11. Support de porte-lame (1) selon la revendication 10, dans lequel l'axe de rotation (R) est disposé parallèlement à ladite direction de coulissement (DS).

12. Support de porte-lame (1) selon la revendication 9, dans lequel les moyens d'engagement inférieurs (70) comprennent un élément élastique (72) disposé pour solliciter ledit élément d'engagement (71) vers ladite position engagée.

13. Support de porte-lame (1) selon au moins une des revendications 2 à 12, dans lequel les moyens d'engagement amovibles inférieurs (70) sont complètement contenus dans l'épaisseur (S) du corps (10).

14. Ensemble constitué d'un support de porte-lame de microscope (1) et d'au moins une lame de microscope (80), comprenant :
un support de porte-lame (1) selon au moins une des revendications précédentes ;
au moins une lame de microscope (80) configurée pour être logée de manière amovible dans un logement correspondant parmi ledit au moins un logement (14), chevauchant ladite ouverture traversante centrale (13) de sorte qu'au moins une portion de ladite au moins une lame (80) demeure superposée à ladite ouverture traversante (13).
